# EUROPÄISCHE PATENTSCHRIFT

(11) **EP 3 707 387 B1**
(45) Veröffentlichungstag und Bekanntmachung des Hinweises auf die Patenterteilung: **09.10.2024**
(21) Anmeldenummer: 19708984.0
(22) Anmeldetag: 26.02.2019
(51) Int. Cl.: F04D 25/06, F04D 25/08, F04D 27/00

(54) **ARBEITSPUNKTBESTIMMUNG**
METHOD FOR DETERMINING THE OPERATING POINT
DÉTERMINATION DU POINT DE FONCTIONNEMENT

(30) Priorität: 27.02.2018 DE 102018104394
(43) Veröffentlichungstag der Anmeldung: 16.09.2020
(73) Patentinhaber: ebm-papst Mulfingen GmbH & Co. KG, 74673 Mulfingen (DE)
(72) Erfinder: GÖTZINGER, Marvin, 69427 Mudau (DE); REICHERT, Erik, 97944 Boxberg (DE); WECKERT, Marco, 97980 Bad Mergentheim (DE); WYSTUP, Ralph, 74653 Künzelsau (DE)
(74) Vertreter: Staeger & Sperling Partnerschaftsgesellschaft mbB
(86) Internationale Anmeldenummer: PCT/EP2019/054769
(87) Internationale Veröffentlichungsnummer: WO 2019/166448

(56) Entgegenhaltungen:
- WO-A2-2013/052517
- DE-A1- 102011 106 962
- DE-A1- 2 502 444

## Beschreibung

Die Erfindung betrifft ein Verfahren zur Arbeitspunktbestimmung eines Ventilators. Die Erfindung betrifft insbesondere ein Verfahren zur Arbeitspunktbestimmung eines Ventilators bei dem keine eindeutige Zuordnung zwischen der Drehzahl, der Leistung und dem Volumenstrom des Ventilators möglich ist.

Die sogenannte Ventilatorkennlinie stellt die gegenseitige Abhängigkeit von Volumenstrom und Druckerhöhung dar. Der Verlauf der Ventilatorkennlinie hängt von der Bauart des Ventilators ab. Die Ventilatorkennlinien werden typischerweise an einem dazu geeigneten Ventilatorprüfstand gemessen und erfasst. Zu beachten ist allerdings, dass die Kennlinien typischerweise unter Idealbedingungen an einzelnen freistehenden repräsentativen Lüftern einer Ventilatorbaureihe mit ungehinderter Strömung gemessen wurden. Die realen Kennlinien unter Einbaubedingungen können davon abweichen.

Die Anlagenkennlinie ist der Strömungswiderstand einer Anlage, gegen den der Ventilator arbeiten muss. Der Arbeitspunkt eines Ventilators, der in einer Applikation eingesetzt ist, ergibt sich als Schnittpunkt von Ventilator- und Anlagenkennlinie.

Man unterscheidet zwischen einer eindeutigen Zuordnung und keiner eindeutigen Zuordnung zwischen der Drehzahl, der Leistung und dem Volumenstrom oder Druck des Ventilators. Bei einer eindeutigen Zuordnung kann der Arbeitspunkt direkt nach der Aufnahme der Motorparameter bestimmt werden, da sich der Arbeitspunkt nur in einem möglichen Schnittpunkt der Ventilatorkennlinie und Anlagenkennlinie (Arbeitspunkt) befindet. Wenn die Zuordnung nicht eindeutig ist, könnte sich der Ventilator nach der Aufnahme der Motorparameter theoretisch in mehreren Arbeitspunkten befinden, da keine Information über den Volumenstrom vorliegt. Welcher der Arbeitspunkte das ist, ist nicht ersichtlich, da ohne einen Sensor nur die Motorparameter gemessen und überprüft werden können.

In Anwendungen ist es notwendig den Volumenstrom und somit den Arbeitspunkt eines Ventilators zu bestimmen. Es gibt hierzu sensorbasierte Verfahren, die den Volumenstrom des Ventilators näherungsweise bestimmen können. Ein weit verbreitetes Verfahren zur Bestimmung des Volumenstroms ist z. B. das Differenzdruckmessverfahren. Mithilfe von Druckentnahmestutzen, Druckschläuchen und einem Drucksensor kann der Differenzdruck zwischen der Ansaugdüse des Ventilators und einem Referenzpunkt in der Anlage bestimmt werden. Die gemessene Druckdifferenz ist proportional zum Produkt aus Luftdichte und dem Quadrat des Volumenstroms. Hieraus kann wiederum der Volumenstrom des Ventilators in der Anlage im eingebauten Zustand ermittelt werden. Wenn der Volumenstrom in einer Anwendung bestimmt ist, kann der Arbeitspunkt aus einem zuvor gemessenen Ventilatorkennfeld des Ventilators bestimmt werden.

Diese Lösung ist jedoch aufgrund des hohen Montageaufwandes, der zusätzlichen Materialkosten und der teilweise unzureichenden Genauigkeit bei der Volumenstrombestimmung unzuverlässig und kostenintensiv.

Aus der EP 2 508 811 B1 ist eine Vorrichtung zur Ermittlung des von einem Ventilator transportierten Volumenstroms bekannt, die im Bereich einer Einlaufdüse des Ventilators vorgesehen ist sowie einem Druckdifferenzsensor zur Verbindung einer Messöffnung mit einem Referenzrohr.

Um jedoch einen optimalen Betrieb zu gewährleisten, ist es notwendig, dass in jedem Betriebspunkt des Ventilators dem Volumenstrom eine Druckerhöhung eindeutig zugeordnet werden kann, d. h. der Ventilator muss gemäß einer stetigen Kennlinie arbeiten können.

Weiterer druckschriftlicher Stand der Technik auf dem vorliegenden technischen Gebiet, welcher den Oberbegriff des Anspruchs 1 widerspiegelt, ist in dem Dokument DE 10 2011 106 962 A1 offenbart.

Der Erfindung liegt deshalb die Aufgabe zugrunde, ein universell anwendbares Verfahren zur Arbeitspunktbestimmung eines Ventilators vorzuschlagen, insbesondere ein Verfahren zur Arbeitspunktbestimmung eines Ventilators bei dem keine eindeutige Zuordnung zwischen der Drehzahl, der Leistung und dem Volumenstrom des Ventilators möglich ist.

Diese Aufgabe wird durch die Merkmalskombination gemäß Anspruch 1 gelöst.

Ein Grundgedanke der Erfindung liegt darin, eine universelle Lösung für unterschiedliche Ventilatorbauarten vorzusehen, wobei mittels Hochläufen der Arbeitspunkt A anhand von Motorparametern M bestimmt wird. Erfindungsgemäß wird daher ein Verfahren zur Arbeitspunktbestimmung eines von einem Elektromotor betriebenen Ventilators in einer Anlage vorgeschlagen, wobei das Verfahren mindestens einen Hochlauf des Ventilators umfasst. Anhand von Motorparametern M (z.B. Drehzahl, Leistung, Strom, Drehmoment) des Ventilators kann bei mindestens einem dieser Hochläufe der Arbeitspunkt des Ventilators bestimmt werden. Während des Hochlaufs erfolgt die Messung der Motorparameter Mi für eine Vielzahl von Drehzahlen. Daraus werden die strömungstechnischen Parameter Pi (z.B. Volumenstrom, Druck), vorzugsweise aus einem gemessenen Ventilatorkennfeld, bestehend aus strömungstechnischen Parametern und Motorparametern oder über die einschlägigen Ventilatorgesetze, bestimmt.

Als Hochlauf kann entweder ein Vorwärtslauf oder ein Rückwärtslauf durchgeführt wenn, um den Arbeitspunkt zu bestimmen. In manchen Fällen sind auch zwei Hochläufe notwendig, um den Arbeitspunkt zu bestimmen. Die Reihenfolge der Hochläufe spielt dabei keine Rolle.

Bei einem Vorwärtslauf werden einer oder mehrere Arbeitspunkte durch Erhöhung oder Verringerung der Drehzahl des Ventilators entlang einer Anlagenkennlinie angefahren. Die Drehrichtung kann der Spezifikation des Ventilators entnommen werden und entspricht der Betriebsdrehrichtung.

Bei einem Rückwärtslauf werden einer oder mehrere Arbeitspunkte durch Erhöhung oder Verringerung der Drehzahl des Ventilators entlang einer Anlagenkennlinie angefahren. Die Drehrichtung ist entgegengesetzt der Betriebsdrehrichtung des Ventilators.

Für den Fall, dass eine eindeutige Zuordnung zwischen den strömungstechnischen Parametern P_{i,v} und den Motorparametern M_{i,v} im Vorwärtslauf möglich ist, kann der Arbeitspunkt Aᵥ bestimmt werden.

Für den Fall, dass eine eindeutige Zuordnung zwischen den strömungstechnischen Parametern P_{i,R} und den Motorparametern M_{i,R} im Rückwärtslauf möglich ist, kann der Arbeitspunkt Aᵥ bestimmt werden.

Für den Fall, dass keine eindeutige Zuordnung zwischen den strömungstechnischen Parametern P _{j,i,v} und den Motorparametern M_{i,v} im Vorwärtslauf möglich ist, wird ein erster Definitionsbereich D₁ und ein zweiter Definitionsbereich D2 im Kennliniendiagramm des Ventilators jeweils zwischen zwei Polynomfunktionen (z.B. durch eine Ursprungsparabel und eine Ursprungsgerade) definiert, die sich jeweils in einem der beiden möglichen Arbeitspunkte A_{1,V} bzw. A_{2,V} im Vorwärtsbetrieb des Ventilators schneiden.

Es erfolgt ein Abgleich der erfassten Betriebspunkte B_{j,i,V} im Vorwärtslauf mit den Definitionsbereichen D1 und D2. Für den Fall, dass wenigstens einer der erfassten Betriebspunkte B_{1,i,V} (i=1,...,m-1) außerhalb des definierten ersten Definitionsbereichs D1 und ferner alle erfassten Betriebspunkte B_{2,i,V} (i=1,...,m-1) innerhalb des zweiten Definitionsbereichs D2 liegen, ist der Arbeitspunkt A_{2,V} bestimmt.

Für den Fall, dass wenigstens einer der erfassten Betriebspunkte B_{2,i,V} (i=1,...,m-1) außerhalb des definierten zweiten Definitionsbereichs D2 und ferner alle erfassten Betriebspunkte B_{1,i,V} (i=1,...,m-1) innerhalb des ersten Definitionsbereichs D1 liegen, ist der Arbeitspunkt A_{1,V} bestimmt.

Für den Fall, dass eine eindeutige Zuordnung zwischen den strömungstechnischen Parametern P_{i,R} und den Motorparametem M_{i,R} im Rückwärtslauf möglich ist und ein Vorwärtslauf durchgeführt wurde, wird die Ausgleichsanlagenkennlinie f_{vowärts,1}(P_{1,i,V}) durch die Betriebspunkte B_{1,i,V} und die Ausgleichsanlagenkennlinie f_{vowärts,2}(P_{2,i,V}) durch die Betriebspunkte B_{2,i,V}; aus dem Vorwärtslauf und die Ausgleichsanlagenkennlinie f_{rückwärts} (P_{i,R}) durch die Betriebspunkte B_{i,R} aus dem Rückwärtslauf zur Bestimmung des Arbeitspunktes verwendet.

Wenn die aus dem Rückwärtslauf resultierende Ausgleichsanlagenkennlinie f_{rückwärts} (P_{i,R}) näher an der Ausgleichsanlagenkennlinie f_{vowärts,1}(P_{1,i,V}) liegt als an der Ausgleichsanlagenkennlinie f_{vowärts,2}(P_{2,i,V}) ist der Arbeitspunkt A_{1,V} als Arbeitspunkt bestimmt.

Wenn die aus dem Rückwärtslauf resultierende Ausgleichsanlagenkennlinie f_{rückwärts} (P_{i,R}) näher an der Ausgleichsanlagenkennlinie f_{vowärts,2}(P_{2,i,V}) liegt als an der Ausgleichsanlagenkennlinie f_{vowärts,1}(P_{1,i,V}) ist der Arbeitspunkt A_{2,V} als Arbeitspunkt bestimmt.

Für den Fall, dass keine eindeutige Zuordnung zwischen den strömungstechnischen Parametern und den Motorparametem M_{i,R} im Rückwärtslauf möglich ist und ein Vorwärtslauf bereits durchgeführt wurde, wird eine erste Ausgleichsanlagenkennlinie f_{vowärts,1}(P_{1,i,V}) durch die Betriebspunkte B_{1,i,V} und eine zweite Ausgleichsanlagenkennlinie f_{vowärts,2}(P_{2,i,V}) durch die Betriebspunkte B_{2,i,V} aus dem Vorwärtslauf und eine erste Ausgleichsanlagenkennlinie f_{rückwärts,1} (P_{1,i,R}) durch die Betriebspunkte B_{1,i,R} und eine zweite Ausgleichsanlagenkennlinie f_{rückwärts,2} (P_{2,i,R}) durch die Betriebspunkte B_{2,i,R} aus dem Rückwärtslauf zur Bestimmung des Arbeitspunktes verwendet.

Wenn die Ausgleichsanlagenkennlinie f_{vowärts,1}(P_{1,i,V}) näher an einer der beiden Ausgleichsanlagenkennlinien f_{rückwärts,1} (P_{1,i,R}) und f_{rückwärts,2} (P_{2,i,R}) liegt als die Ausgleichsanlagenkennlinie f_{vowärts,2}(P_{2,i,V}) an den Ausgleichsanlagenkennlinien f_{rückwärts,1} (P_{1,i,R}) und f_{rückwärts,2} (P_{2,i,R}) ist der Arbeitspunkt A_{1,V} als Arbeitspunkt bestimmt.

Wenn die Ausgleichsanlagenkennlinie f_{vowärts,2}(P_{2,i,V}) näher an einer der beiden Ausgleichsanlagenkennlinien f_{rückwärts,1} (P_{1,i,R}) und f_{rückwärts,2} (P_{2,i,R}) liegt als die Ausgleichsanlagenkennlinie f_{vowärts,1}(P_{1,i,V}) an den Ausgleichsanlagenkennlinien f_{rückwärts,1} (P_{1,i,R}) und f_{rückwärts,2} (P_{2,i,R}) ist der Arbeitspunkt A_{2,V} als Arbeitspunkt bestimmt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

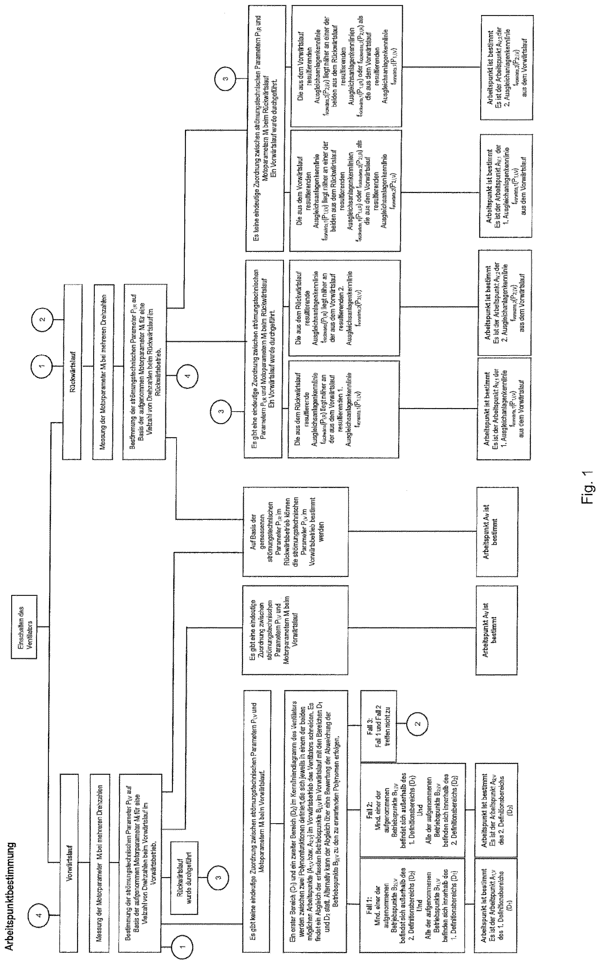

Fig. 1 ein Flussdiagramm zur Darstellung des Prozessablaufs des Verfahrens zur Bestimmung des Arbeitspunktes des Ventilators;

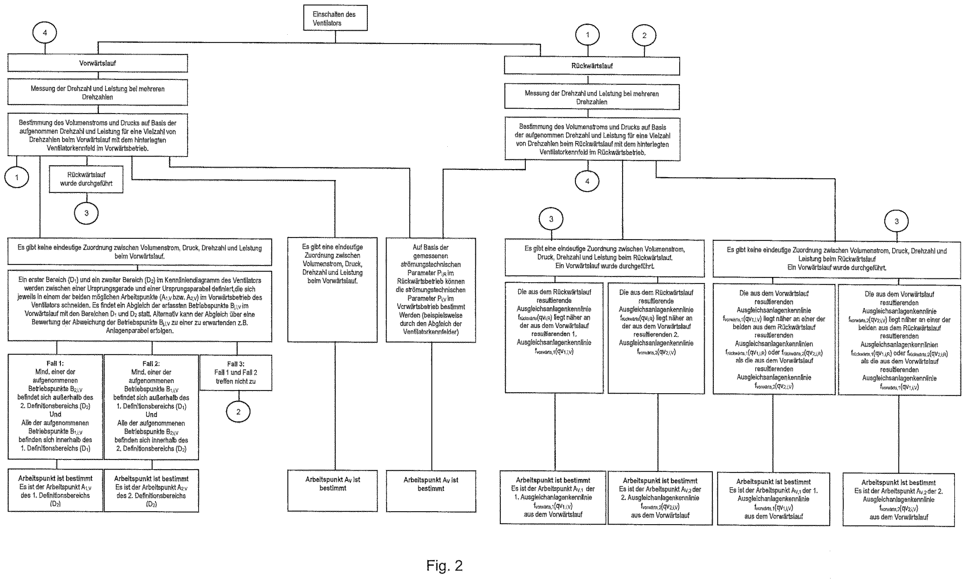

Fig. 2 ein Flussdiagramm zur Darstellung des Prozessablaufs des Verfahrens zur Bestimmung des Arbeitspunktes des Ventilators anhand eines Ausführungsbeispiels;

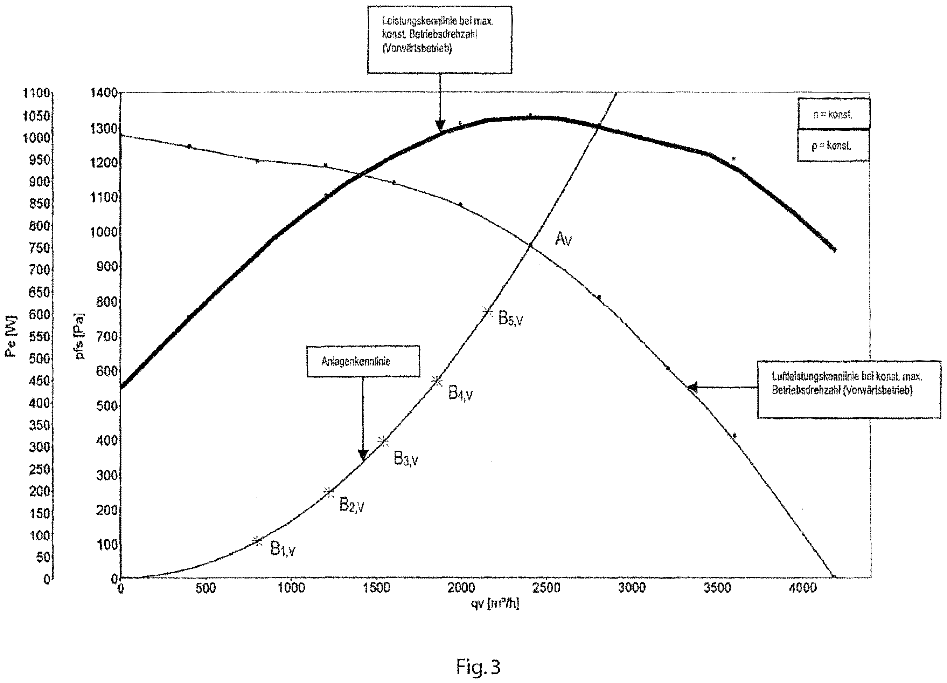

Fig. 3 ein Diagramm mit unterschiedlichen Kennlinien eines beispielhaften Ventilators, einer Vielzahl von aufgenommenen Betriebspunkten B_{i,V} (i=1,..., m-i) im Vorwärtslauf und dem Arbeitspunkt Av im Vorwärtslauf;

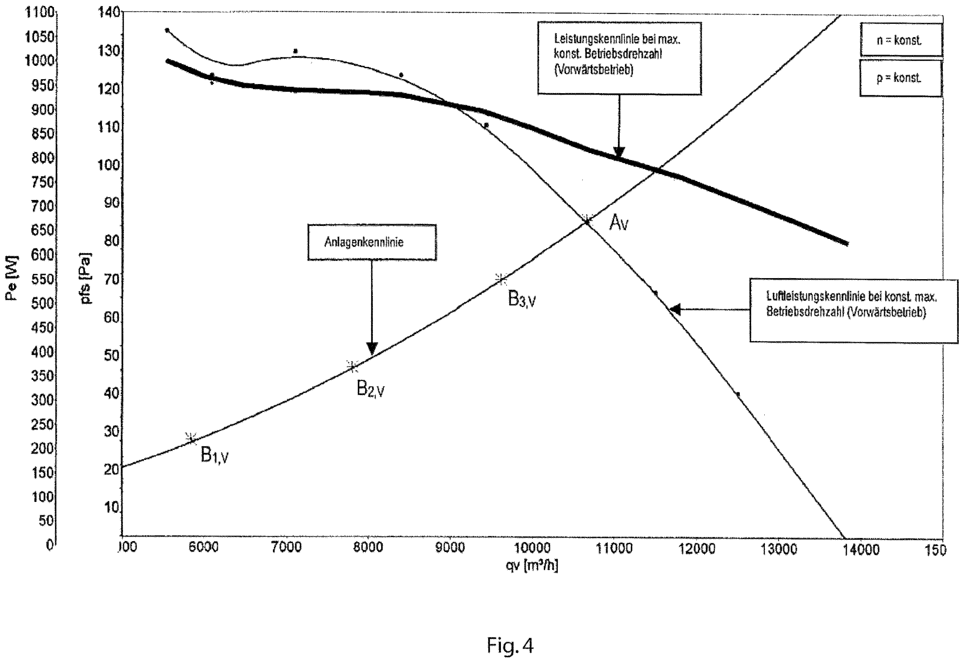

Fig. 4 ein Diagramm mit unterschiedlichen Kennlinien eines beispielhaften Ventilators, einer Vielzahl von aufgenommenen Betriebspunkten B_{i,V} (i=1,..., m-i) im Vorwärtslauf und dem Arbeitspunkt Av im Vorwärtslauf (erstes Ausführungsbeispiel);

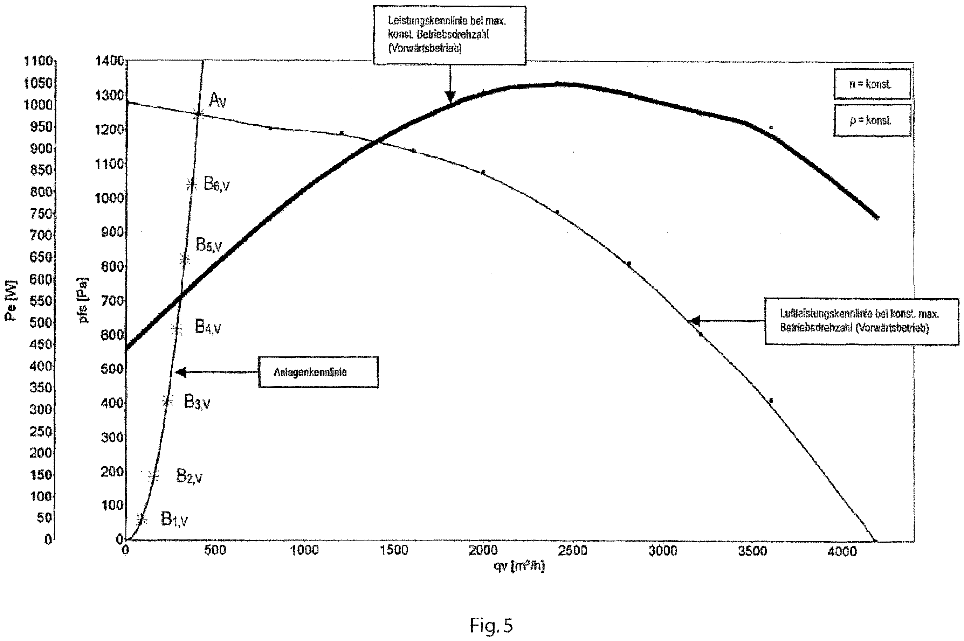

Fig. 5 ein Diagramm mit unterschiedlichen Kennlinien eines beispielhaften Ventilators, einer Vielzahl von aufgenommenen Betriebspunkten B_{i,V} (i=1,..., m-1) im Vorwärtslauf und dem eindeutigen Arbeitspunkt Av im Vorwärtslauf (zweites Ausführungsbeispiel);

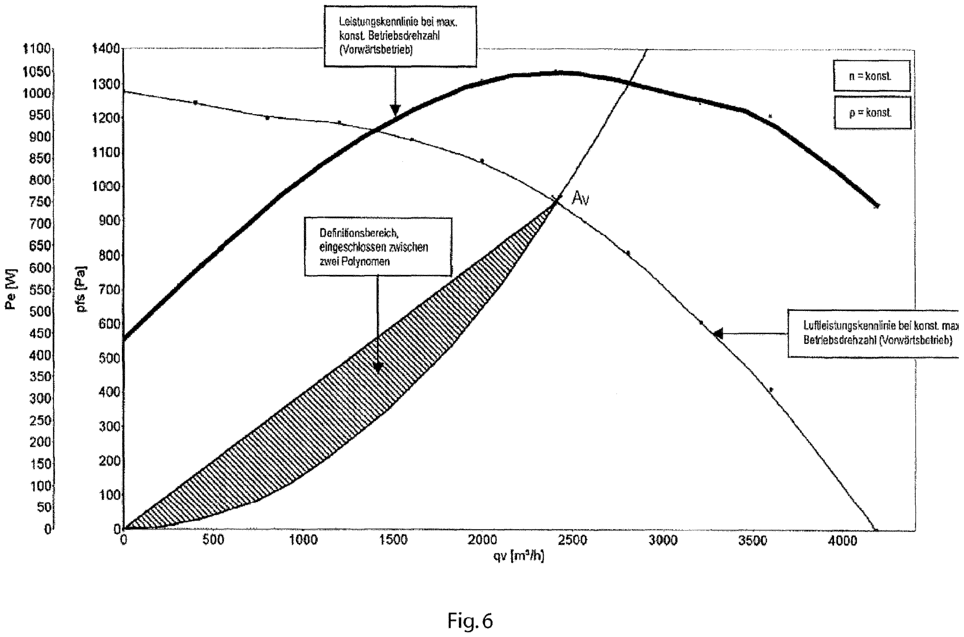

Fig. 6 ein Diagramm mit unterschiedlichen Kennlinien eines beispielhaften Ventilators, einem Arbeitspunkt Av im Vorwärtslauf und einem Definitionsbereich, eingeschlossen zwischen zwei Polynomen, z.B. einer Ursprungsgerade und einer Ursprungsparabel;

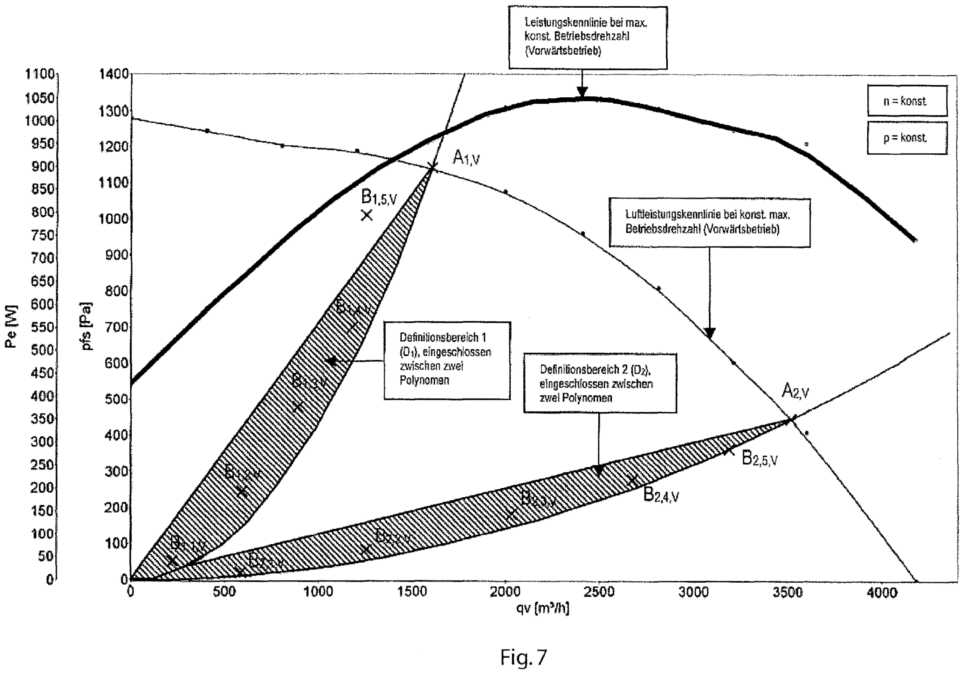

Fig. 7 ein Diagramm mit unterschiedlichen Kennlinien eines beispielhaften Ventilators, einer Vielzahl von aufgenommenen Betriebspunkten B_{j,i,v}(j=1,2; i=1,...,m-1) im Vorwärtslauf, einem Arbeitspunkt A_{1,v} und einem Arbeitspunkt A_{2,v} im Vorwärtslauf, einem ersten Definitionsbereich D1, der durch zwei Polynome eingeschlossen wird und einem zweiten Definitionsbereich D2, der durch zwei Polynome eingeschlossen wird (erstes Ausführungsbeispiel);

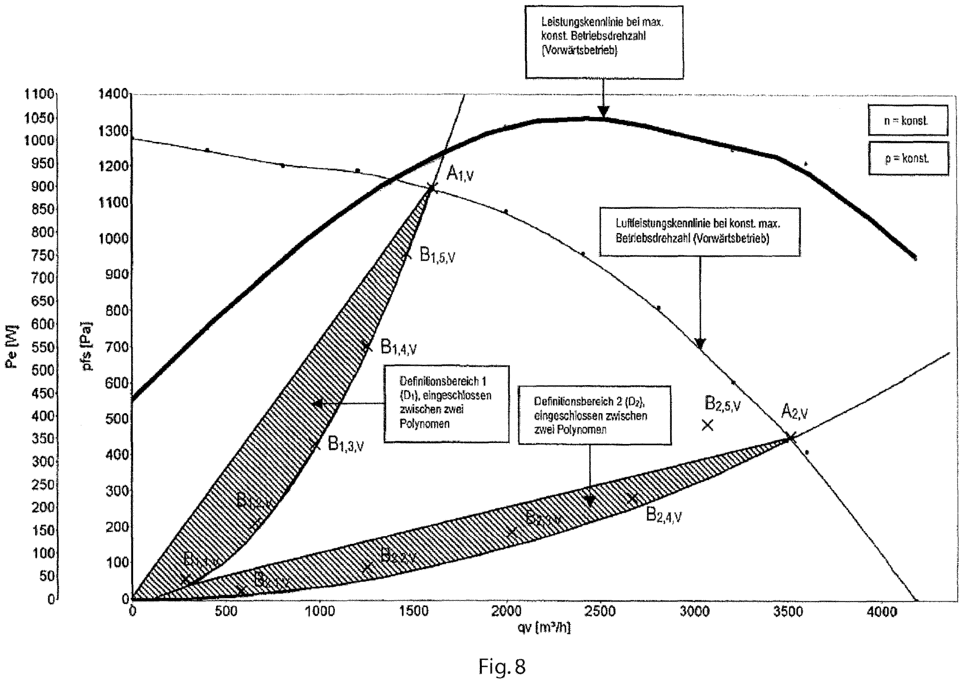

Fig. 8 ein Diagramm mit unterschiedlichen Kennlinien eines beispielhaften Ventilators, einer Vielzahl von aufgenommenen Betriebspunkten B_{j,i,v}(j=1,2; i=1,...,m-1) im Vorwärtslauf, einem möglichen Arbeitspunkt A_{1,v} und einem Arbeitspunkt A_{2,v} im Vorwärtslauf, einem ersten Definitionsbereich D1, der durch zwei Polynome eingeschlossen wird und einem zweiten Definitionsbereich D2, der durch zwei Polynome eingeschlossen wird (zweites Ausführungsbeispiel);

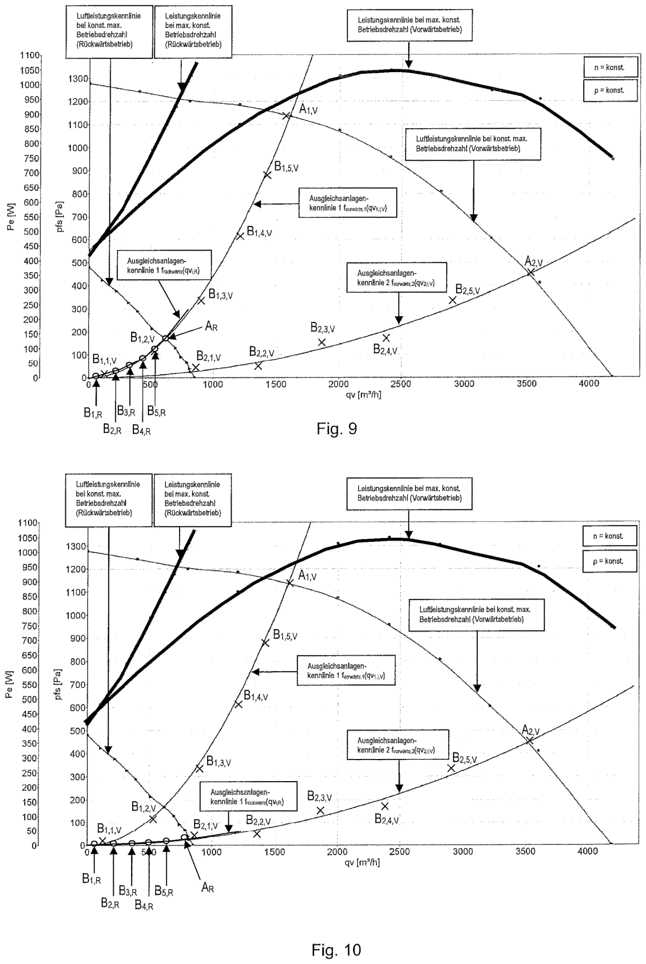

Fig. 9 ein Diagramm mit unterschiedlichen Kennlinien eines beispielhaften Ventilators, einer Vielzahl von aufgenommenen Betriebspunkten B_{j,i,v}(j=1,2; i=1,...,m-1) im Vorwärtslauf, einer Vielzahl von aufgenommenen Betriebspunkten B_{i,R}(i=1,...,k-1) im Rückwärtslauf, einem Arbeitspunkt A_{1,v} und einem Arbeitspunkt A_{2,v} im Vorwärtslauf, einem Arbeitspunkt A_{R} im Rückwärtslauf, jeweils eine Ausgleichanlagenkennlinie durch die Betriebspunkte B_{1,i,v}, B_{2,i,v}, B_{i,R} (erstes Ausführungsbeispiel);
Fig. 10 ein Diagramm mit unterschiedlichen Kennlinien eines beispielhaften Ventilators, einer Vielzahl von aufgenommenen Betriebspunkten B_{j,i,v}(j=1,2; i=1,...,m-1) im Vorwärtslauf, einer Vielzahl von aufgenommenen Betriebspunkten B_{i,R}(i=1,...,k-1) im Rückwärtslauf, einem Arbeitspunkt A_{1,v} und einem Arbeitspunkt A_{2,v} im Vorwärtslauf, einem Arbeitspunkt A_{R} im Rückwärtslauf, jeweils eine Ausgleichanlagenkennlinie durch die Betriebspunkte B_{1,i,v}, B_{2,i,v}, B_{i,R} (zweites Ausführungsbeispiel);

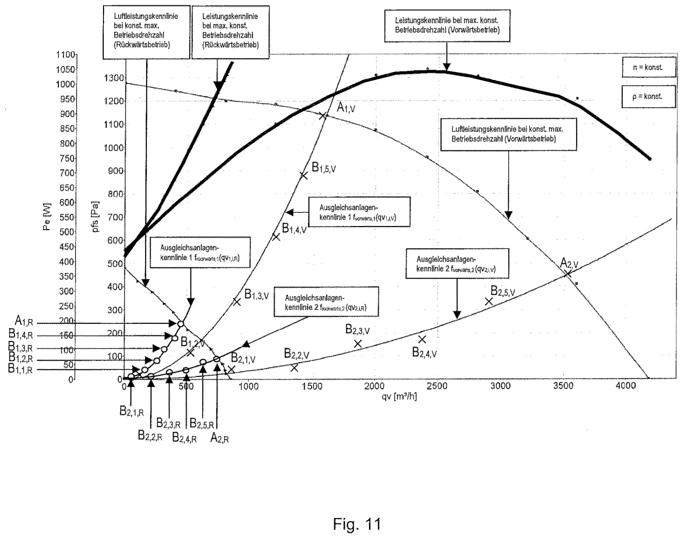

Fig. 11 ein Diagramm mit unterschiedlichen Kennlinien eines beispielhaften Ventilators, einer Vielzahl von aufgenommenen Betriebspunkten B_{j,i,v}(j=1,2; i=1,...,m-1) im Vorwärtslauf, einer Vielzahl von aufgenommenen Betriebspunkten B_{j,i,R}(j=1,2, i=1,...,k-1) im Rückwärtslauf, einem Arbeitspunkt A_{1,v} und einem Arbeitspunkt A_{2,v} im Vorwärtslauf, einem Arbeitspunkt A_{1,R} im Rückwärtslauf, jeweils eine Ausgleichanlagenkennlinie durch die Betriebspunkte B_{1,i,v}, B_{2,j,v}, B_{2,i,R};

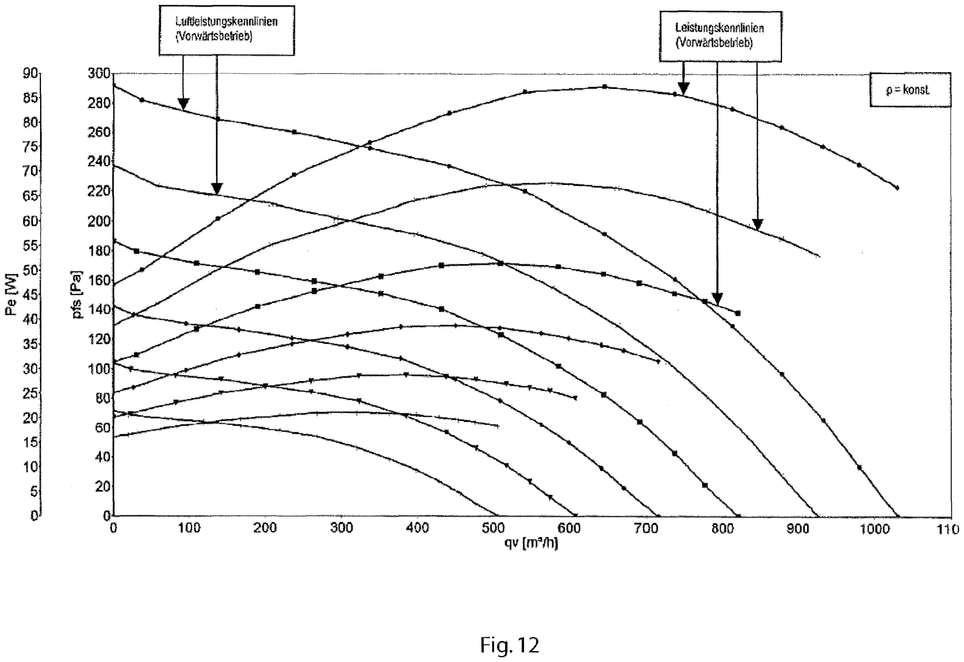

Fig. 12 beispielhaftes Ventilatorkennfeld mit strömungstechnischen Parametern und Motorparametern im Vorwärtsbetrieb, dargestellt mit Volumenstrom, Druck und Leistung und

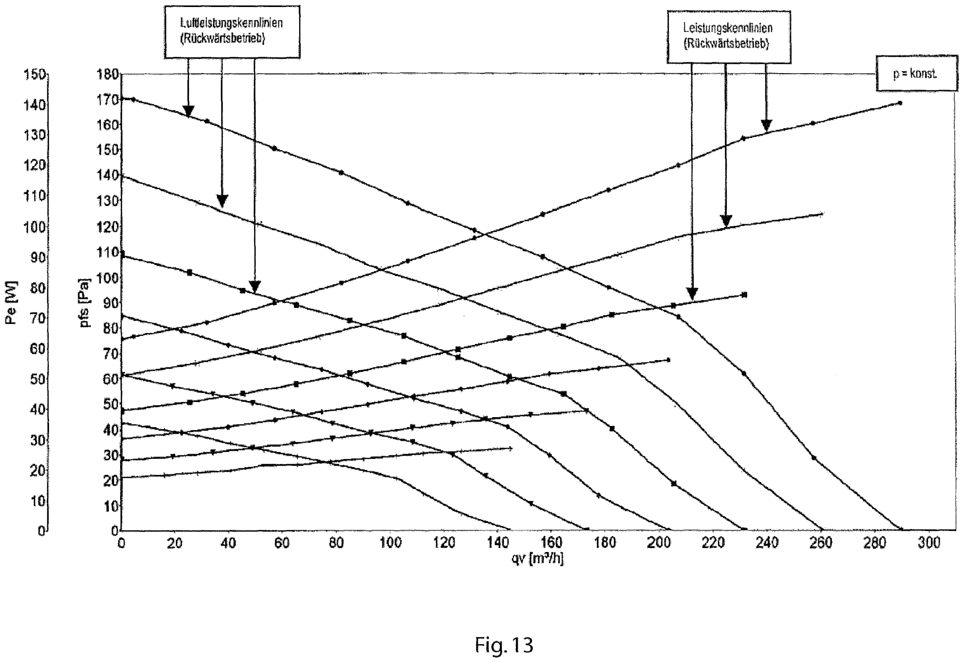

Fig. 13 beispielhaftes Ventilatorkennfeld mit strömungstechnischen Parametern und Motorparametern im Rückwärtsbetrieb, dargestellt mit Volumenstrom, Druck und Leistung.

## Patentansprüche

1. Verfahren zur Arbeitspunktbestimmung eines von einem Elektromotor betriebenen Ventilators in einer Anlage, wobei das Verfahren mindestens einen Hochlauf des Ventilators umfasst, wobei anhand von Motorparametern des Ventilators bei wenigstens einem Hochlauf des mindestens einen Hochlaufs der Arbeitspunkt A des Ventilators bestimmt wird, wobei bei dem wenigstens einem Hochlauf des mindestens einen Hochlaufs eine Messung der Motorparametern Mi für eine Vielzahl von Drehzahlen erfolgt und wobei eine Bestimmung von strömungstechnischen Parametern Pi für die Vielzahl unterschiedlicher Drehzahlen erfolgt.

2. Verfahren nach Anspruch 1, wobei ein Hochlauf erfolgt und der Hochlauf ein Vorwärtslauf ist.

3. Verfahren nach Anspruch 1, wobei ein Hochlauf erfolgt und der Hochlauf ein Rückwärtslauf ist.

4. Verfahren nach Anspruch 1, wobei zwei Hochläufe erfolgen und die Hochläufe einem Vorwärtslauf sowie einem Rückwärtslauf in gewünschter Reihenfolge entsprechen.

5. Verfahren nach Anspruch 1, wobei für den Fall, dass eine eindeutige Zuordnung zwischen den strömungstechnischen Parametern P_{i,v} und den Motorparametern M_{i,v} im Vorwärtslauf möglich ist, der Arbeitspunkt Aᵥ bestimmt wird.

6. Verfahren nach Anspruch 2, wobei für den Fall, dass eine eindeutige Zuordnung zwischen den strömungstechnischen Parametern und den Motorparametern M_{i,R} im Rückwärtslauf möglich ist, der Arbeitspunkt Aᵥ bestimmt wird.

7. Verfahren nach einem der vorhergehenden Ansprüche 1 bis 5, wobei für den Fall, dass keine eindeutige Zuordnung zwischen den strömungstechnischen Parametern P _{j,i,v} und den Motorparametern M_{i,v} im Vorwärtslauf möglich ist, ein erster Definitionsbereich D₁ und ein zweiter Definitionsbereich D2 im Kennliniendiagramm des Ventilators jeweils zwischen zwei Polynomfunktionen definiert wird, die sich jeweils in einem der beiden möglichen Arbeitspunkte A_{1,V} bzw. A_{2,V} im Vorwärtsbetrieb des Ventilators schneiden.

8. Verfahren nach Anspruch 7, wobei ein Abgleich der erfassten Betriebspunkte B_{j,i,V} im Vorwärtslauf mit den Definitionsbereichen D1 und D2 erfolgt und
für den Fall, dass wenigstens einer der erfassten Betriebspunkte B_{1,i,V} (i=1,...,m-1) außerhalb des definierten ersten Definitionsbereichs D1 und ferner alle erfassten Betriebspunkte B_{2,i,V} (i=1,...,m-1) innerhalb des zweiten Definitionsbereichs D2 liegen, der Arbeitspunkt A_{2,V} bestimmt wird und
für den Fall, dass wenigstens einer der erfassten Betriebspunkte B_{2,i,V} (i=1,...,m-1) außerhalb des definierten zweiten Definitionsbereichs D2 und ferner alle erfassten Betriebspunkte B_{1,i,V} (i=1,...,m-1) innerhalb des ersten Definitionsbereichs D1 liegen, der Arbeitspunkt A_{1,V} bestimmt wird.

9. Verfahren nach einem der vorhergehenden Ansprüche 2 bis 5, wobei für den Fall, dass eine eindeutige Zuordnung zwischen den strömungstechnischen Parametern und den Motorparametem M_{i,R} im Rückwärtslauf möglich ist und ein Vorwärtslauf durchgeführt wurde, die Ausgleichsanlagenkennlinie f_{vowärts,1}(P_{1,i,V}) durch die Betriebspunkte B_{1,i,V} und die Ausgleichsanlagenkennlinie f_{vowärts,2}(P_{2,i,V}) durch die Betriebspunkte B_{2,i,V}; aus dem Vorwärtslauf und die Ausgleichsanlagenkennlinie f_{rückwärts} (P_{i,R}) durch die Betriebspunkte B_{i,R} aus dem Rückwärtslauf zur Bestimmung des Arbeitspunktes verwendet wird.

## Claims

1. A method for determining the operating point of an electric motor-driven fan in a system, wherein the method comprises at least one startup of the fan, wherein based on motor parameters of the fan, the operating point A of the fan is determined from at least one startup of the at least one startup, wherein during the at least one startup of the at least one startup, the motor parameters Mᵢ are measured for a plurality of speeds, wherein technical flow parameters Pi are determined for the plurality of different speeds.

2. The method according to claim 1, wherein a startup is performed, and the startup is a forward-rotation startup.

3. The method according to claim 1, wherein a startup is performed, and the startup is a reverse-rotation startup.

4. The method according to claim 1, wherein two startups are performed, and the startups correspond to a forward-rotation startup and a reverse-rotation startup, in a desired sequence.

5. The method according to claim 1, wherein if a clear correlation between the technical flow parameters P_{i,v} and the motor parameters M_{i,v} during forward rotation is possible, the operating point is determined as Aᵥ.

6. The method according to claim 2, wherein if a clear correlation between the technical flow parameters and the motor parameters M_{i,R} during reverse rotation is possible, the operating point is determined as Aᵥ.

7. The method according to any one of the preceding claims 1 to 5, wherein if a clear correlation between the technical flow parameters P_{j,i,v} and the motor parameters M_{i,v} during forward rotation is not possible, a first domain D₁ and a second domain D2 are defined in the curve diagram for the fan, in each case between two polynomial functions, which intersect in each case at one of the two possible operating points A_{1,v} and A_{2,v}, respectively, during forward operation of the fan.

8. The method according to claim 7, wherein the recorded duty points B_{j,i,v} during forward rotation are compared with the domains D1 and D2, and
if at least one of the recorded duty points B_{1,i,v} (i = 1,...,m-1) lies outside of the defined first domain D1 and further, if all of the recorded duty points B_{2,i,v} (i = 1,...,m-1) lie within the second domain D2, the operating point is determined as A_{2,v}, and
if at least one of the recorded duty points B_{2,i,v} (i = 1,...,m-1) lies outside of the defined second domain D2, and further, if all of the recorded duty points B_{1,i,v} (i = 1,... ,m-1) lie within the first domain D1, the operating point is determined as A_{1,v}.

9. The method according to any one of the preceding claims 2 to 5, wherein if a clear correlation between the technical flow parameters and the motor parameters M_{i,R} during reverse rotation is possible and a forward-rotation startup has been carried out, then the system compensation curve f_{forward,1}(P_{1,i,v}) through the duty points B_{1,i.v} and the system compensation curve f_{forward,2}(P_{2,i,v}) through the duty points B_{2,i,v} from the forward-rotation startup and the system compensation curve fᵣₑᵥₑᵣₛₑ(P_{i,R}) through the duty points B_{i,R} from the reverse-rotation startup are used to determine the operating point.

## Revendications

1. Procédé permettant de déterminer le point de fonctionnement d'un ventilateur actionné par un moteur électrique dans une installation, dans lequel le procédé comprend au moins une accélération du ventilateur, dans lequel le point de fonctionnement A du ventilateur est déterminé à l'aide de paramètres de moteur du ventilateur lors d'au moins une accélération de ladite au moins une accélération, dans lequel une mesure des paramètres de moteur Mi est effectuée pour une pluralité de vitesses de rotation lors de ladite une accélération de ladite au moins une accélération, et dans lequel une détermination de paramètres fluidiques Pi est effectuée pour la pluralité de vitesses de rotation différentes.

2. Procédé selon la revendication 1, dans lequel une accélération a lieu, et l'accélération est une marche avant.

3. Procédé selon la revendication 1, dans lequel une accélération a lieu et l'accélération est une marche arrière.

4. Procédé selon la revendication 1, dans lequel deux accélérations ont lieu, et les accélérations correspondent à une marche avant ainsi qu'à une marche arrière dans un ordre souhaité.

5. Procédé selon la revendication 1, dans lequel, dans le cas où une attribution univoque entre les paramètres fluidiques P_{i,v} et les paramètres de moteur M_{i,v} est possible en marche avant, le point de fonctionnement Aᵥ est déterminé.

6. Procédé selon la revendication 2, dans lequel, dans le cas où une attribution univoque entre les paramètres fluidiques et les paramètres de moteur M_{i,R} en marche arrière est possible, le point de fonctionnement Aᵥ est déterminé.

7. Procédé selon l'une quelconque des revendications précédentes 1 à 5, dans lequel, dans le cas où aucune attribution univoque entre les paramètres fluidiques P_{j,i,v} et les paramètres de moteur M_{i,v} en marche avant n'est possible, une première plage de définition D1 et une deuxième plage de définition D2 dans le réseau de caractéristiques du ventilateur sont définies respectivement entre deux fonctions polynomiales qui se croisent respectivement dans l'un des deux points de fonctionnement A_{1,V} ou A_{2,V} possibles en fonctionnement avant du ventilateur.

8. Procédé selon la revendication 7, dans lequel un alignement des points de fonctionnement B_{j,i,V} détectés en marche avant est effectué avec les plages de définition D1 et D2, et
dans le cas où au moins l'un des points de fonctionnement B_{1,i,V} (i=1, ..., m-1) détectés se trouve à l'extérieur de la première zone de définition D1 définie, et en outre tous les points de fonctionnement B_{2,i,V} (i=1, ..., m-1) détectés se trouvent à l'intérieur de la deuxième plage de définition D2, le point de fonctionnement A2 est déterminé, et
dans le cas où au moins l'un des points de fonctionnement B_{2,i,V} (i=1, ..., m-1) détectés se trouve à l'extérieur de la deuxième plage de définition D2 définie, et en outre tous les points de fonctionnement B_{1,i,V} (i=1, ..., m-1) détectés se trouvent à l'intérieur de la première plage de définition D1, le point de fonctionnement A_{1,V} est déterminé.

9. Procédé selon l'une quelconque des revendications précédentes 2 à 5, dans lequel, dans le cas où une attribution univoque entre les paramètres fluidiques et les paramètres de moteur M_{i,R} en marche arrière est possible, et une marche avant a été effectuée, la ligne caractéristique de l'installation d'alignement f_{vorwärts,1}(P_{1,i,V}) est utilisée par les points de fonctionnement B_{1,i,V} et la ligne caractéristique d'installation d'alignement f_{vorwärts,2}(P_{2,i,V}) est utilisée par les points de fonctionnement B_{2,i,V;} issus de la marche avant, et la ligne caractéristique d'installation d'alignement f_{rückwärts}(P_{i,R}) est utilisée par les points de fonctionnement B_{i,R} issus de la marche arrière pour déterminer le point de fonctionnement.
